# EUROPEAN PATENT SPECIFICATION

(11) **EP 3 009 314 B1**
(45) Date of publication and mention of the grant of the patent: **21.10.2020**
(21) Application number: 15189841.8
(22) Date of filing: 14.10.2015
(51) Int. Cl.: B60T 11/20, B60T 13/68, B60T 13/74

(54) **AUTOMATICALLY CONTROLLED BRAKING SYTEM FOR MOTOR VEHICLES AND RELATED METHOD OF ACTUATING AND CONTROLLING SUCH A SYSTEM**
AUTOMATISCH GESTEUERTES BREMSSYSTEM FÜR FAHRZEUGE UND ENTSPRECHENDE METHODE ZUM BETRIEB EINES SOLCHEN SYSTEMS
SYSTÈME DE FREINS POUR VÉHICULE CONTROLÉ AUTOMATIQUEMENT ET PROCÉDÉ CORRESPONDANT D'ACTUATION D'UN TEL SYSTÈME

(30) Priority: 17.10.2014 IT BG20140045
(43) Date of publication of application: 20.04.2016
(73) Proprietor: Freni Brembo S.p.A., 24035 Curno (Bergamo) (IT)
(72) Inventor: CIOTTI, Alessandro, I-24035 Curno, BERGAMO (IT); SALA, Paolo, I-24035 Curno, BERGAMO (IT); SZEWCZYK, Beniamin, I-24035 Curno, BERGAMO (IT); DI STEFANO, Massimo, I-24035 Curno, BERGAMO (IT)
(74) Representative: Mitola, Marco

(56) References cited:
- DE-A1- 4 401 524
- DE-A1-102007 034 320
- DE-A1-102013 203 672
- DE-A1-102013 216 423

## Description

### FIELD OF APPLICATION

This invention regards an automatically controlled braking system for motor vehicles and a related method of actuating and controlling a braking system for motor vehicles.

### STATE OF THE ART

In particular, in the art, the use of braking systems equipped with "Brake By Wire" type actuators is increasingly spreading: in other words, the user does not directly control the braking devices, be they brake disc callipers or drums, by directly actuating a lever or pedal that puts under pressure the system fluidically connected to such braking devices; but the braking requested by the user, exerted by the actuation of a lever or pedal, is read and converted into the corresponding actuation of the braking devices by the related actuators. These actuators are usually of electromechanical or electro-hydraulic type and comprise for example an electric motor that actuates a kinematic mechanism operatively connected to said braking devices. For example, the mechanism may comprise a hydraulic piston that generates the pressure needed to actuate the braking device; it is also possible to realise brake-by-wire type actuations entirely without hydraulic circuits wherein the kinematic mechanism is directly connected, for example, to the brake pads or shoes of the braking devices.

The brake-by-wire type actuations are, however, accompanied by "conventional" actuations, i.e., with the hydraulic circuits, that intervene in case of malfunctioning of the first so as to always ensure the fulfilment of the brake request made by the user: this ensures safety even in case of malfunction of the BBW system.

Always in terms of safety, BBW systems type are particularly suitable to be integrated with both control devices of the braking force imposed by the user who acts on the related manual controls such as levers and/or pedals and with vehicle stability control systems that always act on the actuation of the braking devices.

Regarding the control devices of the braking force, known by the name of ABS systems, they have, for example, the function of avoiding that, due to excessive braking action requested by the user, one or more of the wheels of the vehicle lock, compromising stability and control.

Such situations are all the more dangerous when the vehicle is on surfaces with poor traction, such as slippery or wet. Moreover, such control devices are also used in the art for a dynamic stability control of the vehicle: in fact, it is known that, by applying an appropriate braking force on individual wheels or, for example, by changing the distribution of the braking force on separate axles of the vehicle, it is possible to generate yaw moments able to correct the trajectory of the vehicle, improving dynamic control.

Therefore, the solutions of the known art typically provide for anti-lock systems, known with the name of ABS systems, that act on braking systems equipped with hydraulic circuits, substantially intervening on the pressure of the hydraulic circuit of the braking system so as to modulate the hydraulic pressure and thus the braking force on the individual wheel subject to momentary locking.

As regards the stability control functions of the vehicle, also known as ESP, these have the purpose of controlling the stability of the vehicle by variably distributing the braking force between different axles of the vehicle as well as between the wheels of a same axle of the vehicle.

It is also possible, as mentioned above, to impose a braking torque on individual wheels of the vehicle, in order to correct their trajectory and improve dynamic stability.

In summary, BBW type braking systems must be integrated with ABS type braking control systems and with stability control devices.

All of these devices provide the ability to act by imposing or reducing the braking torque on individual wheels of the vehicle, simultaneously and independently of each other. Moreover, such devices can intervene in response to the actuation of the braking system by the user, by correcting the braking request user himself or even automatically activating themselves to control the stability of the vehicle, for example when the trajectory imposed by the user is not congruent with the actual trajectory of the vehicle.

To be able to perform all of these activations and adjustments, it is known to equip the vehicle with a centralised pressure modulator with a single main pressure generator and hydraulic valves for the management of the individual hydraulic lines of the brakes, which is able to perform the task of controlling pressure even on the individual wheel. This solution is not without drawbacks. The modulator must be dimensioned for the powers simultaneously required by the four wheels, so it involves problems of bulk and weight. In addition to the design problems, there are also known control problems linked to the fact that with only a single pressure generator and a system of valves, the independent control of the pressure between the axles of the vehicle and between the individual wheels is limited. Such solution is known from DE 10 2013 203 672 A1.

It is also known to equip each wheel of the vehicle with a specific actuator of its own braking device.

In this way, each actuator of each individual wheel can be actuated in a totally independent manner. This system architecture is not without drawbacks. In fact, the redundancy of actuator devices causes problems of cost, weight and size of the system. The various actuator devices must then be managed simultaneously by control units that must perform complex calculations based on the data they receive from special sensors in very short times. Therefore, they also increase the costs of the control units used for this type of operations.

### PRESENTATION OF THE INVENTION

Therefore, there is a need to solve the drawbacks and limitations mentioned in reference to the known art, namely there is a need to provide a braking system that ensures reliability, reduced actuation times and, at the same time, has components having small masses and lower costs.

This need is met by a braking system for vehicles according to claim 1 and by a method for the actuation and control of a braking system for vehicles according to claim 25.

In particular, this need is met by a braking system for vehicles comprising:
- at least one manual actuation element, such as a lever, a pedal or a button, operatively connected to a processing unit to transmit to said processing unit a request for a braking action by a user,
- wherein the manual actuation element is provided with means of contrast suitable to simulate a predetermined actuation trend, linear or non-linear, which relates the actuation force and/or stroke of the actuation element,
- at least one first electro-hydraulic actuator device operatively connected to a first and to a second hydraulic supply circuit of a respective first and second braking device, such as a calliper of a disc brake or a drum, the first electro-hydraulic actuator device being actuated by the processing unit depending on the request for a braking action,
- wherein the first and second hydraulic supply circuits respectively comprise a first and second device for regulating the pressure, each interposed between the first electro-hydraulic actuator device and the corresponding braking device, and operatively connected to said processing unit,
- wherein the processing unit is programmed to be able to selectively and independently actuate the regulating devices and the first electro-hydraulic actuator device, so as to set or vary the actuation pressures of the braking devices, downstream of the regulating devices, regardless of the delivery pressures of the first electro-hydraulic actuator device, upstream of the regulating devices.

According to a possible embodiment, the regulating devices comprise solenoid control valves suitable to open and/or close the fluid connection between the first electro-hydraulic actuator device and each braking device, and wherein the processing unit is programmed to operate the first regulating device to close the fluid connection of the first braking device so as to maintain a constant delivery pressure to said first braking device, while the first electromechanical actuator device changes the delivery pressure of the second braking device which is kept in fluid connection with the first electro-hydraulic actuator device by the second regulating device.

According to a possible embodiment, the processing unit is programmed so as to:
- restore the delivery pressure of the first actuator device so as to equal the value of the supply pressure to the first braking device, downstream of the first regulating device,
- restore the fluid connection between the first braking device and the first actuator device, through the operation of the first regulating device.

According to a possible embodiment, the processing unit is programmed so as to:
- maintain the fluid connection between the first actuator device and the first and second braking device, in order to have the said actuation pressures of the braking devices equal to the delivery pressure of the first actuator device, while the processing unit validates the operation of the system,
- in case of correction of the braking being required, changing the delivery pressure of the first actuator device, so as to maintain said actuation pressures of the braking devices,
- in case of changing of the actuation pressure of only one of said braking devices being required, actuating the first actuator device so as to provide the necessary actuation pressure to said braking device, and disconnecting the other braking device, by means of its regulating device, so as not to be affected by the change of pressure imposed by the first electro-hydraulic actuator device.

According to a possible embodiment, the first electro-hydraulic actuator device comprises an electric motor which actuates a pusher acting on a pump provided with two pistons arranged in series, each piston being fluidically connected with one of said first and second hydraulic circuits.

According to a possible embodiment, the first electro-hydraulic actuator device comprises an electric motor which actuates a pusher acting on a pump provided with two pistons arranged in parallel, each piston being fluidically connected with one of said first and second hydraulic circuits.

According to a possible embodiment, the electric motor is connected to the pusher by means of a kinematic mechanism which converts the rotary movement of the electric motor into translatory movement of the pusher.

According to a possible embodiment, the kinematic mechanism comprises a pinion and a worm screw, coupled by means of a reversible or irreversible type coupling.

According to a possible embodiment, the mechanism which connects the electric motor to the pusher comprises rotation sensors of the electric motor and translation sensors of the pusher, so as to supply to the processing unit data on the effective operation of the first actuator device.

According to a possible embodiment, the pressure regulating devices comprise at least one piezo-electric device acting on the pistons or floats of the first electro-hydraulic actuator device so as to block such pistons or floats to modulate the pressure in said first and second hydraulic supply circuits independently.

According to a possible embodiment, the first and second hydraulic circuits contain a magnetorheological fluid and wherein the regulating devices comprise electric actuators suitable to change the rheological properties of said magnetorheological fluid so as to vary the actuation pressures of the respective braking devices and wherein the processing is programmed to operate the first regulating device to close the fluid connection of the first braking device so as to maintain a constant delivery pressure to said first braking device, while the first electrohydraulic actuator device changes the delivery pressure of the second braking device which is kept in fluid connection with the first actuator device by the second regulating device.

According to a possible embodiment, the first and second hydraulic supply circuits contain a magnetorheological fluid and wherein the pressure regulating devices comprise electric actuators suitable to modify the rheological properties of said magnetorheological fluid in order to selectively block the actuation of the respective braking devices.

For example, the processing unit is programmed to operate the first regulating device to close the fluid connection of the first braking device so as to maintain a constant delivery pressure to said first braking device, while the first electro-hydraulic actuator device changes the delivery pressure of the second braking device which is kept in fluid connection with the first actuator device 36 by the second regulating device.

According to a possible embodiment, the first electro-hydraulic actuator device comprises a pump provided with a separate chamber containing magnetorheological fluid, said chamber housing electric actuators suitable to modify the rheological properties of said magnetorheological fluid in order to selectively block the actuation of the pistons or floats of the first electro-hydraulic actuator device and thus of the respective braking devices.

According to a possible embodiment, the first electro-hydraulic actuator device is operatively connected to braking devices associated with wheels positioned on a first axle of an associable vehicle.

According to a possible embodiment, the system comprises electromechanical actuators associated with additional braking devices of the vehicle acting on the wheels positioned on a second axle, wherein said electromechanical actuators comprise an electric motor kinematically connected to a pusher of the corresponding additional braking device, said pusher being mechanically associated with a friction element such as a pad or shoe of the braking device suitable to exert a braking action on an associable brake disc or drum respectively.

According to a possible embodiment, the system comprises a second electro-hydraulic actuator device operatively connected to a third and fourth hydraulic supply circuit of a respective third and fourth braking device, such as a calliper of a disc brake or a drum, the second electro-hydraulic actuator device being actuated by the processing unit depending on the request for a braking action.

According to a possible embodiment, the second electro-hydraulic actuator device is of the same type as the first electro-hydraulic actuator device and is connected to hydraulic supply circuits and pressure regulating devices of the same type as those associated with the first electro-hydraulic actuator device.

According to a possible embodiment, the processing unit supervises the control of the dynamics, stability and braking of the vehicle and in which it pilots at least one control unit for each electro-hydraulic actuator device.

According to a possible embodiment, the processing unit is programmed to actuate the braking devices by means of the respective electro-hydraulic actuator and/or electromechanical devices and the regulating devices, even when the manual actuation elements are not actuated by the user, so as to stabilise the dynamics of the associable vehicle according to the driving conditions.

According to a possible embodiment, the braking system is provided with speed sensors applied on the wheels connected to the braking devices, and in which the processing unit is programmed to prevent the blocking in rotation of the individual wheels, reducing the braking action on the wheel in locking phase, by means of the electro-hydraulic actuator devices and/or electromechanical devices and the regulating devices.

According to a possible embodiment, the braking system is provided with speed sensors applied on the wheels influenced by the braking devices, and in which the processing unit is programmed to prevent the slipping in rotation of the individual wheels, applying a braking action to the wheel in slipping phase, by means of the electro-hydraulic actuator and/or electromechanical devices and said regulating devices.

According to a possible embodiment, the processing unit is programmed to divide the braking action over the individual braking devices so as to stabilise the trajectory of the vehicle, for an equal braking and deceleration action of the vehicle, appropriately actuating the electro-hydraulic actuator and/or electromechanical devices and the regulating devices.

According to a possible embodiment, the at least one manual actuation element is fitted with sensors such as force and/or stroke meters of said manual actuation element, so as to provide the processing unit with parameters to interpret and convert into actuation signals for the electro-hydraulic actuator and/or electromechanical devices and the regulating devices.

According to a possible embodiment, the means of contrast of the at least one actuation element are connected and controlled by the processing unit, so as to provide a feedback to the user on the actual deceleration obtained during the braking phase, changing the stroke and/or the contrast force of the actuation element.

The technical problem of this invention is also solved by a method of actuating and controlling a braking system for vehicles comprising the steps of:
- providing a braking system (4) for vehicles comprising:
- at least one manual actuation element, such as a lever, a pedal or a button, operatively connected to a processing unit to transmit to said processing unit a request for a braking action by a user,
- wherein the manual actuation element is provided with means of contrast suitable to simulate a predetermined actuation trend, linear or non-linear, which relates the actuation force and/or stroke of the actuation element,
- at least one first electro-hydraulic actuator device operatively connected to a first and to a second hydraulic supply circuit of a respective first and second braking device, such as a calliper of a disc brake or a drum, the first electro-hydraulic actuator device being actuated by the processing and control unit depending on the request for a braking action,
- wherein the first and second hydraulic supply circuits respectively comprise a first and second device for regulating the pressure, each interposed between the first electro-hydraulic actuator device and the corresponding braking device, and operatively connected to said processing and control unit,
- selectively and independently actuating the regulating devices with each other by means of the processing unit, so as to set or vary the actuation pressures of the braking devices, downstream of the regulating devices, regardless of the delivery pressures of the first electro-hydraulic actuator device, upstream of the regulating devices.

According to a possible embodiment, the method of actuating and controlling a braking system for vehicles comprises the steps of:
- maintain the fluid connection between the first actuator device and the first and second braking device, in order to have the said actuation pressures of the braking devices equal to the delivery pressure of the first actuator device, while the processing unit validates the operation of the system,
- in case of correction of the braking being required, changing the delivery pressure of the first actuator device, so as to maintain said actuation pressures of the braking devices,
- in case of changing of the actuation pressure of only one of said braking devices being required, actuating the first actuator device so as to provide the necessary actuation pressure to said braking device, and disconnecting the other braking device, by means of its regulating device, so as not to be affected by the change of pressure imposed by the first electro-hydraulic actuator device.

According to an embodiment, the method for operating and controlling according to this invention comprises the step of providing a braking system for vehicles according to any one of the embodiment variants listed above.

### DESCRIPTION OF THE DRAWINGS

Further characteristics and advantages of this invention will be more understandable from the following description of its preferred and non-limiting examples of embodiments, wherein:

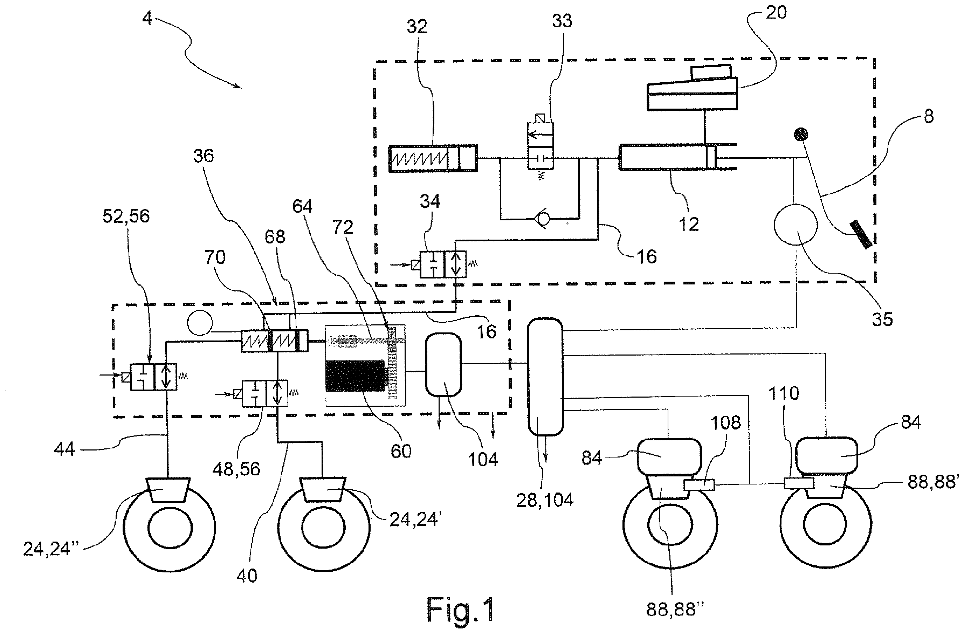

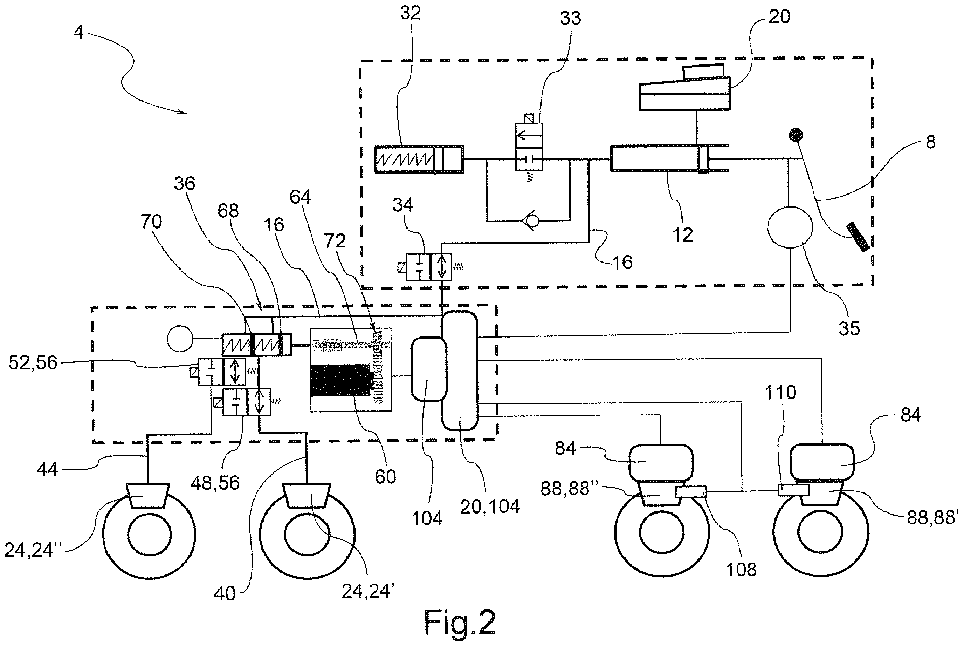

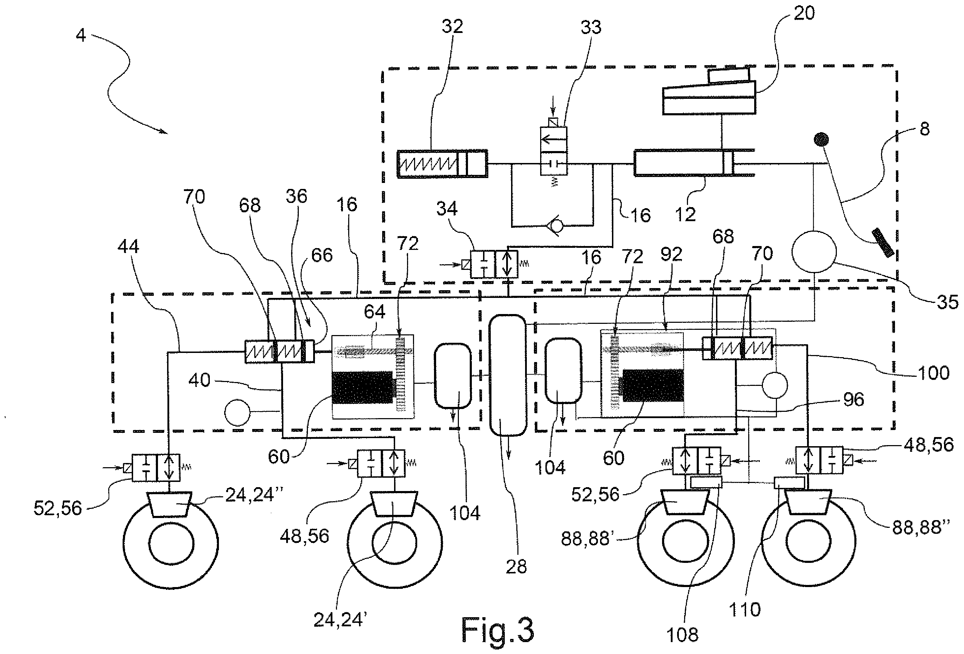

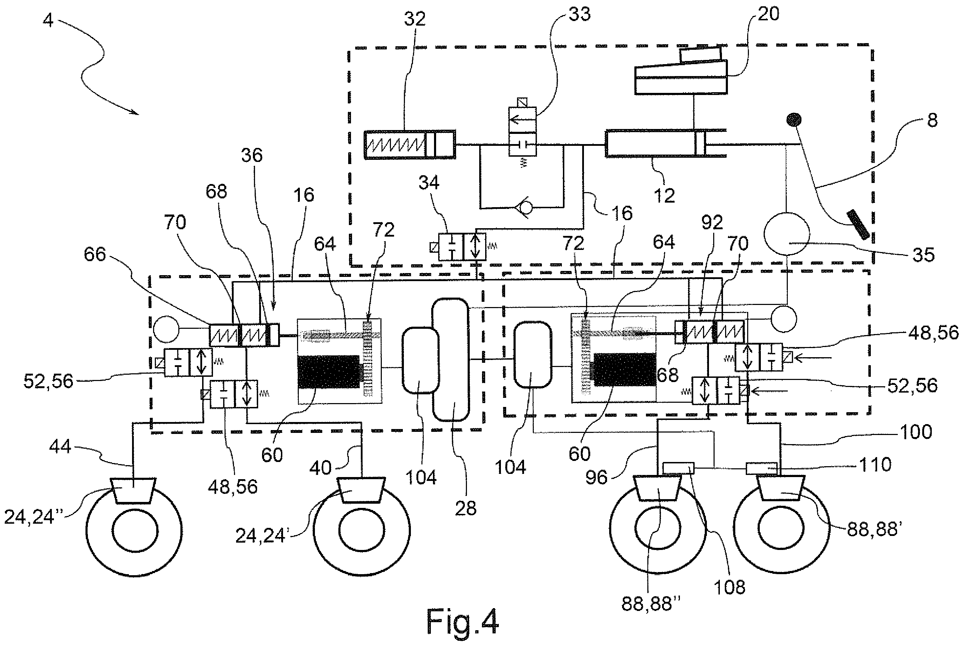

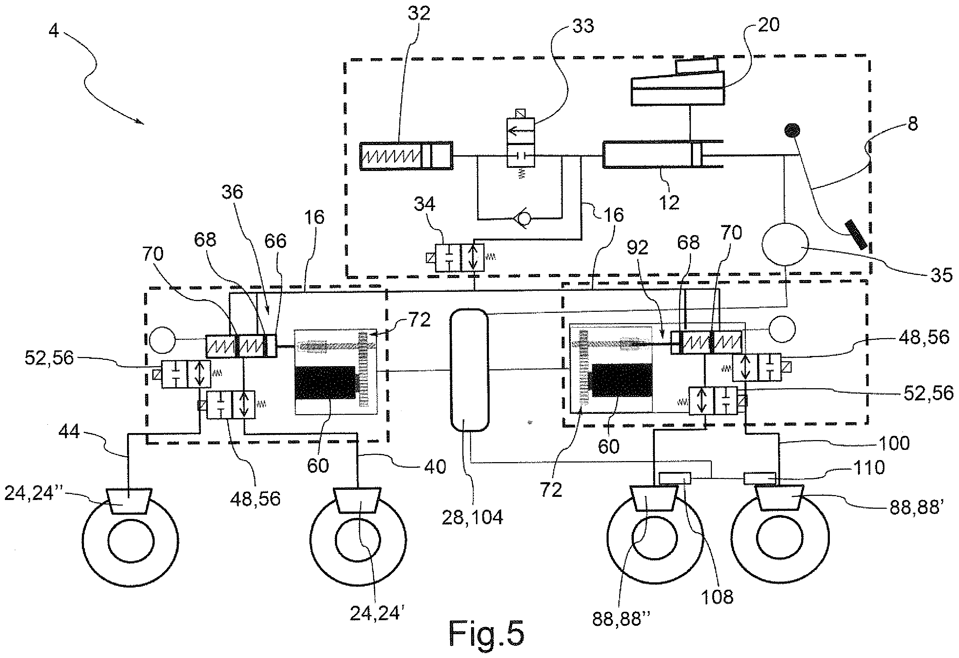

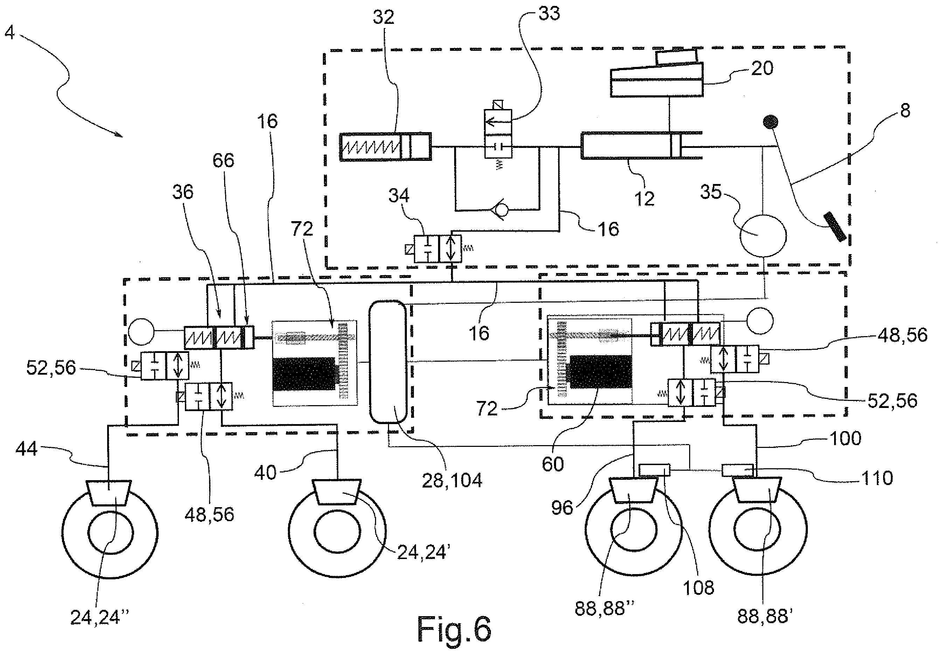

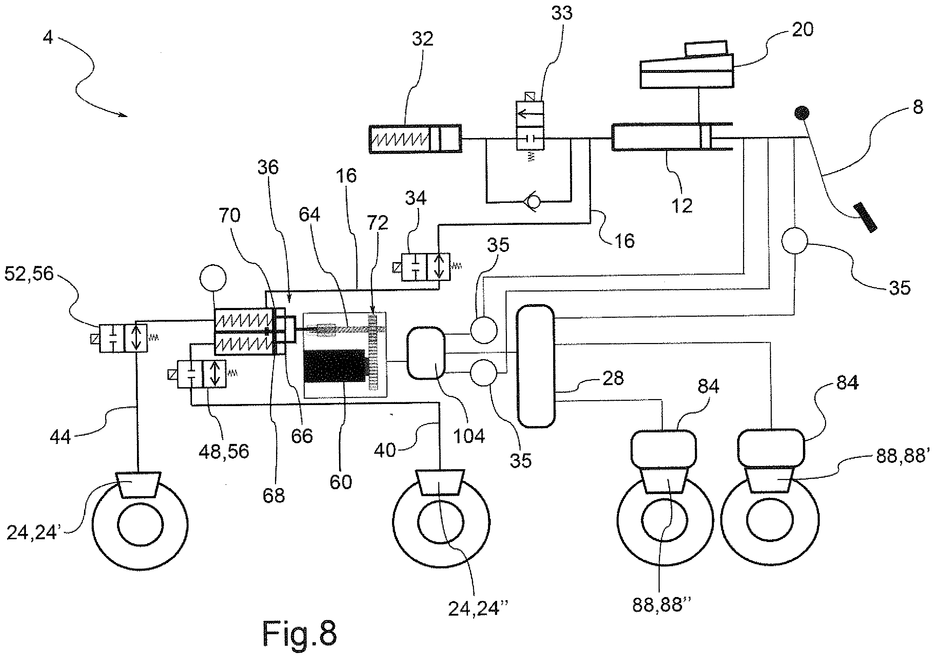

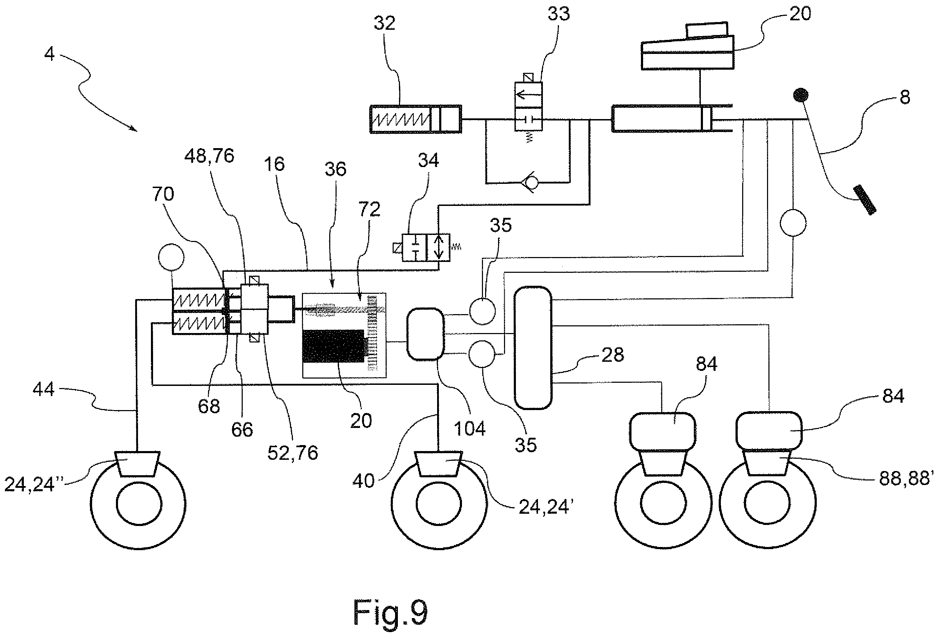

Figures 1 to 8 are successive schematic views of the embodiment variants of a braking system according to this invention. The embodiment of figure 9 does not correspond to this invention.

The members, or parts of members, in common between the embodiments described below will be indicated with the same reference numbers.

### DETAILED DESCRIPTION

With reference to the above figures, the reference number 4 globally indicates a braking system for motor vehicles.

First, for the purposes of this invention, it is necessary to specify that, by motor vehicles is meant, in general, motor vehicles, of any type, size and power, with at least two axles.

Moreover, always for the purposes of this invention, the type of braking device used downstream of the system on the wheels of the associable vehicle is irrelevant since it can be, preferably but not exclusively, a calliper for a fixed or floating type disc brake in a single piece or two half-callipers connected to each other and so on.

The braking 4 comprises at least one manual actuation element or manual actuator 8, such as a lever, a pedal or a button.

The manual actuator 8 allows the user to give the braking system 4 a braking request.

The manual actuator 8 comprises, for example, an operating lever or pedal that actuates a hydraulic pump 12 that pressurises the brake fluid in a manual delivery circuit 16.

The manual actuator 8 is equipped with a brake fluid tank 20 to supply brake fluid to the manual delivery circuit 16 following the consumption of the friction material of the brake pads.

In standard operating conditions of the braking system 4, the manual delivery circuit 16 is not fluidically connected to the braking devices 24.

In other words, the user acts on the manual actuator 8 to provide a braking request but does not have direct control of the braking devices 24 as he would in a conventional braking system of the direct actuation type.

As better explained below, the braking system 4 is equipped with device/operating logics able to connect the manual delivery circuit 16 directly to the braking devices 24, for example in case of malfunction of the system 4, so to ensure the safety of the vehicle and to allow the user to exercise the braking action on the vehicle in any condition.

The manual actuation element 8 is operatively connected to a processing unit 28 to transmit to said processing unit 28 a request for a braking action by a user.

The manual actuation element 8 is provided with means of contrast 32 suitable to simulate a predetermined actuation trend, linear or non-linear, which relates the actuation force and/or stroke of the manual actuation element 8.

The hydraulic connection of the manual actuator 8 to the means of contrast 32 and/or to the braking devices 24 is adjusted for example by means of suitable solenoid valves.

For example, a first solenoid valve 33 can connect or disconnect the hydraulic pump 12 from the means of contrast 32; in addition, a second solenoid valve 34 can connect or disconnect the hydraulic pump 12 from the manual delivery circuit 16; when the system 4 is operating normally, the second solenoid valve 34 closes the connection between the hydraulic pump and the manual delivery circuit 16 and, at the same time, the first solenoid valve 33 opens the hydraulic connection between the hydraulic pump 12 and the means of contrast 32. In this way, the means of contrast 32 provides feedback to the user, through the hydraulic pump 12 and the manual actuator 8, while the user has no direct control on the braking devices 24 thanks to the closure of the manual delivery circuit 16.

In case of anomaly, the braking system reverses the positions of the solenoid valves 33,34 so as to bypass the means of contrast 32 and allow the direct manual actuation of the braking devices 24 by means of the hydraulic pump 12.

According to an embodiment, the at least one manual actuation element 8 is fitted with sensors 35, such as, for example, force and/or stroke meters of the manual actuation element itself, so as to provide the processing unit 28 with parameters to interpret and convert into actuation signals for the actuation of the electro-hydraulic actuator devices and/or electromechanical devices and the regulating devices, described below.

For example, the means of contrast 32 of the at least one manual actuation element 8 are connected and controlled by the processing unit 28, so as to provide a feedback to the user on the actual deceleration obtained during the braking phase, changing the stroke and/or the contrast force of the manual actuation element 8.

It is also possible to use means of contrast 32 of the passive type, i.e., that do not vary the feedback to the user depending on the actual deceleration obtained during the braking phase, but which are limited to offering the user the contrast proportional to the force by these applied to the manual actuator.

Obviously the pedal, whether of the active or passive type, can be designed so as to provide the user with any desired response trend.

The braking system 4 comprises at least one first electro-hydraulic actuator device 36 operatively connected to a first and to a second hydraulic supply circuit 40,44 of a respective first and second braking device 24',24", such as a calliper of a disc brake or a drum, the first electro-hydraulic actuator device 36 being actuated by the processing unit 28 depending on the request for a braking action.

The first and second hydraulic supply circuits 40,44 respectively comprise a first and second device for regulating the pressure 48,52, each interposed between the first electro-hydraulic actuator device 36 and the corresponding braking device 24',24", and operatively connected to said processing unit 28.

Advantageously the processing unit 28 is programmed to be able to selectively and independently actuate the regulating devices 48,52 and the first electro-hydraulic actuator device 36, so as to set or vary the actuation pressures of the braking devices 24',24"), downstream of the regulating devices 48,52, regardless of the delivery pressures of the first electro-hydraulic actuator device 36, upstream of the regulating devices 48,52.

According to an embodiment of this invention, the regulating devices 48,52 comprise solenoid control valves 56 suitable to open and/or close the fluid connection between the first actuator device 36 and each braking device 24',24", and wherein the processing unit 28 is programmed to operate the first regulating device 48 to close the fluid connection of the first braking device 24' so as to maintain a constant delivery pressure to said first braking device 24', while the first electromechanical actuator device 36 changes the delivery pressure of the second braking device 24" which is kept in fluid connection with the first electro-hydraulic actuator device 36 by the second regulating device 52.

In addition, the processing unit 28 is programmed to:
- restore the delivery pressure of the first electro-hydraulic actuator device 36 so as to equal the value of the supply pressure to the first braking device 24', downstream of the first regulating device 48,
- restore the fluid connection between the first braking device 24' and the first electro-hydraulic actuator device 36, through the operation of the first regulating device 48.

In this way, the delivery pressure of the second braking device 24" can be adjusted without changing that of the first braking device 24', for example because the wheel connected to the first braking device 24' has traction while the wheel connected to the second braking device 24" is in locking conditions; subsequently, when the wheel connected to the second braking device 24" recovers traction, the delivery of the first actuator device 36 can be brought back to the value already present on the first braking device 24' and hydraulically reconnect this latter 24' to the first actuator device 36.

According to a possible embodiment, the processing unit 28 is programmed so as to:
- maintain the fluid connection between the first electro-hydraulic actuator device 36 and the first and second braking device 24',24", in order to have said actuation pressures of the braking devices 24',24" equal to the delivery pressure of the first actuator device 36, while the processing unit 28 validates the operation of the braking system 4;
- in case of correction of the braking being required, changing the delivery pressure of the first actuator device 36, so as to maintain the same actuation pressures of the braking devices 24',24",
- in case of changing of the actuation pressure of only one of said braking devices 24" being required, actuating the first actuator device 36 so as to provide the necessary actuation pressure to said braking device 24", and disconnecting the other braking device 24', by means of its regulating device 48, so as not to be affected by the change of pressure imposed by the first electro-hydraulic actuator device 36.

According to a possible embodiment, the first electro-hydraulic actuator device 36 comprises an electric motor 60 which actuates a pusher 64 acting on a pump 66 provided with two pistons 68,70 arranged in series, each piston 68,70 being fluidically connected with one of said first and second hydraulic circuits 40, 44.

According to a further possible embodiment, the first electro-hydraulic actuator device 36 comprises an electric motor 60 which actuates a pusher 64 acting on a pump 66 provided with two pistons 68,70 arranged in parallel, each piston 68,70 being fluidically connected with one of said first and second hydraulic supply circuits 40,44.

For example, the electric motor 60 is connected to the pusher 64 by means of a kinematic mechanism 72 which converts the rotary movement of the electric motor 60 into translatory movement of the pusher 64.

For example, the kinematic mechanism 72 comprises a pinion and a worm screw, coupled by means of a reversible or irreversible type coupling. It is also possible to envisage the use of a recirculating ball screw.

According to an embodiment, the kinematic mechanism 72 which connects the electric motor 60 to the pusher 64 comprises rotation sensors of the electric motor 60 and translation sensors of the pusher 64, so as to supply to the processing unit 28 data on the effective operation of the first electro-hydraulic actuator device 36.

As seen, the pressure regulating devices 48,52 may comprise solenoid control valves 56; these solenoid valves do not directly affect the pressure in the hydraulic supply circuits 40,44 but, by opening and/or closing these circuits, they enable or inhibit the first device electro-hydraulic actuator 36 from changing the pressures in the hydraulic circuits 40,44 themselves.

According to a possible embodiment not being part of the present invention, the pressure regulating devices 48,52 comprise at least one piezo-electric device 76 acting on the pistons or floats 68,70 of the first electro-hydraulic actuator device 36 so as to block such pistons or floats 68,70) to modulate the pressure in said first and second hydraulic supply circuits 40,44 independently.

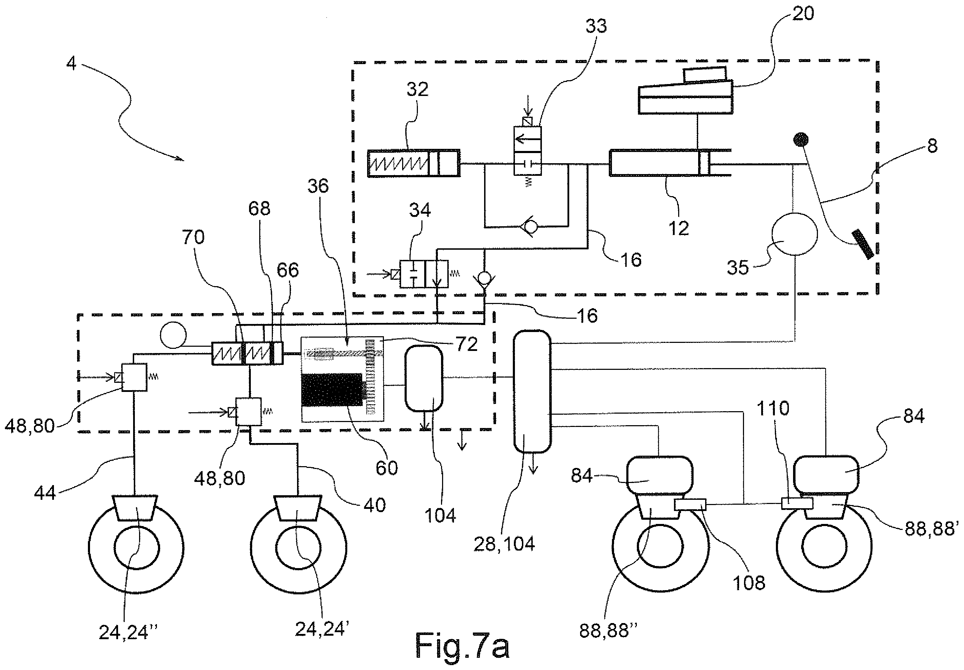

According to a possible embodiment (Figure 7a), the first and second hydraulic supply circuits 40,44 contain a magnetorheological fluid and wherein the regulating devices 48,52 comprise electric actuators 80 suitable to modify the rheological properties of said magnetorheological fluid in order to selectively block the actuation of the respective braking devices 24',24".

For example, the processing unit 28 is programmed to operate the first regulating device 48 to close the fluid connection of the first braking device 24' so as to maintain a constant delivery pressure to said first braking device 24', while the first electro-hydraulic actuator device 36 changes the delivery pressure of the second braking device 24" which is kept in fluid connection with the first actuator device 36 by the second regulating device 52.

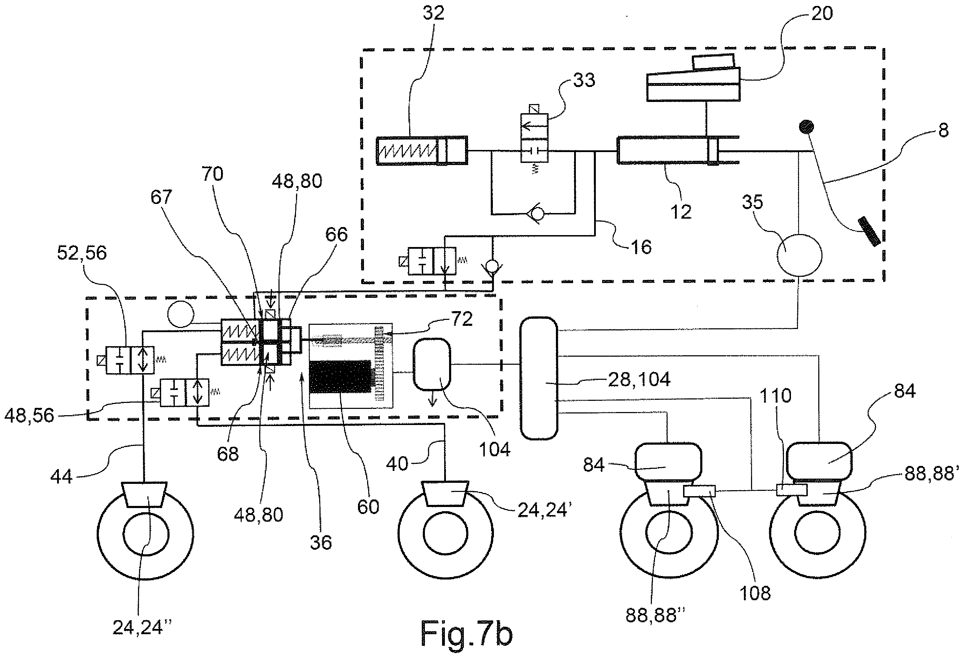

According to a possible embodiment (Figure 7b), the first electro-hydraulic actuator device 36 comprises a pump 66 provided with a separate chamber 67 containing magnetorheological fluid, said chamber housing electric actuators 80 suitable to modify the rheological properties of said magnetorheological fluid in order to selectively block the actuation of the pistons 68,70 of the first electro-hydraulic actuator device 36 and thus of the respective braking devices 24',24".

As seen, the first electro-hydraulic actuator device 36 is operatively connected to the braking devices 24',24" associated with wheels positioned on a first axle of an associable vehicle.

The braking system for vehicles 4 according to this invention may comprise electromechanical actuators 84 associated with additional braking devices 88 of the vehicle acting on the wheels positioned on a second axle, wherein said electromechanical actuators 84 comprise, for example, an electric motor kinematically connected to a pusher of the corresponding additional braking device 88, said pusher being mechanically associated with a friction element such as a pad or shoe of the braking device suitable to exert a braking action on an associable brake disc or drum respectively.

For example, the first and the second axle of the vehicle correspond to the front and rear axles of the vehicle, each equipped with a pair of wheels provided with respective braking devices.

Preferably said electromechanical actuators 84 are operatively connected to said processing unit 28.

The braking system for vehicles 4 according to this invention may also comprise a second electro-hydraulic actuator device 92 operatively connected to a third and fourth hydraulic supply circuit 96,100 of a respective third and fourth braking device 88',88"), such as a calliper of a disc brake or a drum, the second electro-hydraulic actuator device 92 is actuated by the processing unit 28,104 depending on the request for a braking action.

Preferably, the second electro-hydraulic actuator device 92 is of the same type as the first electro-hydraulic actuator device 36 and is connected to hydraulic supply circuits 96,100 and pressure regulating devices 48,52 as described above.

As seen, the processing unit 28 supervises the control of the dynamics, stability and braking of the vehicle; each electro-hydraulic actuator device 36,92 can in turn be equipped with its own control unit.

It is possible to provide a processing unit 28 of the vehicle that supervises the operation of two respective control units 104, each associated with an electro-hydraulic actuator device 36,92. It is also possible to integrate in the processing unit 28 of the vehicle one or even two control units 104 associated with separate axles of the vehicle.

In general, all the functions of management and control of the braking system according to this invention, can be performed by a processing unit, i.e., a centralised control unit 28 or by two separate control units 104.

The braking system according to this invention can be used to manage not only braking but, in general, the stability of the vehicle itself, by means of suitable actuations of the braking devices 24,88 associated with the wheels of the vehicle.

For example, in the braking system for vehicles 4, the processing unit can be programmed to actuate the braking devices 24,88 by means of the respective electro-hydraulic actuator 36,92 and/or electromechanical 84 actuators and the regulating devices 48,52, even when the manual actuation elements 8 are not actuated by the user, so as to stabilise the dynamics of the associable vehicle according to the driving conditions.

As seen, the braking system for vehicles 4 according to the invention is provided with speed sensors applied on the wheels connected to the braking devices 24,88, and in which the processing unit 28 is programmed to prevent the blocking in rotation of the individual wheels, reducing the braking action on the wheel in locking phase, by means of the electro-hydraulic actuator devices 36,92 and/or electromechanical actuators 84 and the regulating devices 48,52. In this way, the ABS function is realised.

It is even possible to equip the braking system 4 with speed sensors applied on the wheels influenced by the braking devices 24,88, as well as to program the processing unit 28 to prevent the slipping in rotation of the individual wheels, applying a braking action to the wheel in slipping phase, by means of said electro-hydraulic actuator 36,92 and/or electromechanical actuators 84 and said regulating devices 48,52. In this way, the anti-skid function of the due to excess torque in relation to their traction is realised.

It is also possible to program the processing unit 28 to divide the braking action over the individual braking devices 24,88 so as to stabilise the trajectory of the vehicle, for an equal braking and deceleration action of the vehicle, appropriately actuating the electro-hydraulic actuator 36,92 and/or electromechanical actuators 84 and the regulating devices 48,52.

In this way, moments of yaw are created that appropriately change the trajectory of the vehicle.

The braking system 4 according to this invention may also provide for the presence of a mechanical or electromechanical device operatively connected to a pair of rear electromechanical actuators 108,110 that act on respective braking devices 88',88" so as to realise the parking brake function of the vehicle; typically, the rear electromechanical actuators rear 108,110 and the corresponding braking devices 88',88" are positioned on the rear wheels of the corresponding vehicle. The actuation of the rear electromechanical actuators 108,110 is piloted by the processing unit 28 and/or by the respective control units 104 when provided.

This invention also relates to a method of actuating and controlling a braking system (4) for vehicles.

This method comprises the steps of providing a braking system 4 for vehicles comprising:
- at least one manual actuation element 8, such as a lever, a pedal or a button, operatively connected to a processing unit 28 to transmit to said processing unit 28 a request for a braking action by a user,
- wherein the manual actuation element 8 is provided with contrast means 32 suitable to simulate a predetermined actuation trend, linear or non-linear, which relates the actuation force and/or stroke of the actuation element 8,
- at least one first electro-hydraulic actuator device 36 operatively connected to a first and to a second hydraulic supply circuit 40,44 of a respective first and second braking device 24',24"), such as a calliper of a disc brake or a drum, the first electro-hydraulic actuator device 36 being actuated by the processing unit 28 depending on the request for a braking action,
- wherein the first and second hydraulic supply circuits 40,44 respectively comprise a first and second device for regulating the pressure 48,52, each interposed between the first electro-hydraulic actuator device 36 and the corresponding braking device 24',24", and operatively connected to said processing unit 28,
- selectively and independently actuating the regulating devices 48,52 by means of the processing unit 28, so as to set or vary the actuation pressures of the braking devices 24',24", downstream of the regulating devices 48,52, regardless of the delivery pressures of the first electro-hydraulic actuator device 36, upstream of the regulating devices 48,52.

According to an embodiment, the method of actuating and controlling a braking system 4 according to this invention comprises the steps of:
- maintaining the fluid connection between the first electro-hydraulic actuator device 36 and the first and second braking device 24',24", in order to have said actuation pressures of the braking devices 24',24" equal to the delivery pressure of the first electro-hydraulic actuator device 36, while the processing unit 28 validates the operation of the system 4,
- in case of correction of the braking being required, changing the delivery pressure of the first electro-hydraulic actuator device 36, so as to maintain said actuation pressures of the braking devices 24',24",
- in case of changing of the actuation pressure of only one of said braking devices 24" being required, actuating the first electro-hydraulic actuator device 36 so as to provide the necessary actuation pressure to said braking device 24", and disconnecting the other braking device 24', by means of its regulating device 48, so as not to be affected by the change of pressure imposed by the first electro-hydraulic actuator device 36.

Obviously, the regulating method according to this invention includes the step of providing and regulating a braking system for vehicles 4 according to all the possible embodiment variants described so far.

As can be appreciated from the description, the braking system for vehicles according to the invention allows overcoming the drawbacks presented in the prior art.

In particular, the braking system for vehicles according to the present invention allows performing all the control functions of braking and vehicle stability of the vehicle without requiring the use of an actuator for each wheel of the vehicle itself.

In fact, it is possible to use an actuator for each axle of the vehicle, since the single actuator is able to manage and change, according to the needs, the actuations of two distinct braking devices so as to vary the braking torques applied to the corresponding wheels.

In this way, the functionalities of the antilocking (ABS) or stability control (ESP) of the vehicle, or its related reliability, are not limited in any way.

The braking system according to this invention ensures safe conditions; in fact, if the actuators should malfunction, the system is able to return to "standard" hydraulic mode, bypassing the control of the actuators, so as to restore the direct actuation of the braking devices by the user: in other words, in case of malfunction, it ensures the direct manual control of the braking devices by the user, through the operation of the manual actuator.

Under standard conditions, i.e., normal operation, the system provides "BBW" or "brake-by-wire" operation in such a way as to obtain fast, powerful and reliable braking that always meets the request for braking torque that the user makes by operating the manual actuator and in such a way as to be able to autonomously intervene on the control of the dynamics of the vehicle in the case of incongruence between the trajectory set by the use and the real one followed by the vehicle.

A person skilled in the art, in order to satisfy contingent and specific needs, may make numerous modifications and variations to the braking systems described above, all however contained within the scope of the invention as defined by the following claims.

## Claims

1. Braking system for vehicles (4) comprising
- at least one manual actuation element (8), such as a lever, a pedal or a button, operatively connected to a processing unit (28) to transmit to said processing unit (28) a request for a braking action by a user,
- wherein the manual actuation element (8) is provided with contrast means (32) suitable to simulate a predetermined actuation trend, linear or non-linear, which relates the actuation force and/or stroke of the manual actuation element (8),
- at least one first electro-hydraulic actuator device (36) operatively connected to a first and to a second hydraulic supply circuit (40, 44) of a respective first and second braking device (24', 24''), such as a calliper of a disc brake or a drum, the first electro-hydraulic actuator device (36) being actuated by the processing unit (28) depending on the request for a braking action,
- wherein the first and second hydraulic supply circuits (40, 44) respectively comprise a first and second device for regulating the pressure (48, 52), each interposed between the first electro-hydraulic actuator device (36) and the corresponding braking device (24', 24"), and operatively connected to said processing unit (28),
- wherein the processing unit (28) is programmed to be able to selectively and independently actuate the regulating devices (48, 52) and the first electro-hydraulic actuator device (36), so as to set the actuation pressure of at least one of the braking devices (24', 24"), downstream of the regulating devices (48, 52), regardless of the delivery pressures of the first electro-hydraulic actuator device (36), upstream of the regulating devices (48, 52),
wherein the regulating devices (48,52) comprise solenoid control valves (56) suitable to open and/or close the fluid connection between the first electro-hydraulic actuator device (36) and each braking device (24', 24"), and wherein the processing unit (28) is programmed to operate the first regulating device (48) to close the fluid connection of the first braking device (24') so as to maintain a constant delivery pressure to said first braking device (24'), while the first electromechanical actuator device (36) changes the actuation pressure of the second braking device (24'') which is kept in fluid connection with the first electro-hydraulic actuator device (36) by the second regulating device (52),
**characterised in that** the processing unit 28 is programmed to:
- adjust the delivery pressure of the first electro-hydraulic actuator device (36) so as to equal the value of the supply pressure to the first braking device (24'), downstream of the first regulating device (48), when the fluid connection of the first braking device is closed
- restore the fluid connection between the first braking device (24') and the first electro-hydraulic actuator device (36), through the operation of the first regulating device (48).

2. Braking system for vehicles (4) according to claim 1, wherein the processing unit (28) is programmed to:
- maintain the fluid connection between the first electro-hydraulic actuator device (36) and the first and second braking device (24', 24''), in order to have said actuation pressures of the braking devices (24', 24") equal to the delivery pressure of the first electro-hydraulic actuator device (36), while the processing unit (28) validates the operation of the system (4),
- in case of correction of the braking being required, changing the delivery pressure of the first electro-hydraulic actuator device (36), so as to maintain said actuation pressures of the braking devices (24', 24''),
- in case of changing of the actuation pressure of only one of said braking devices (24'') being required, actuating the first electro-hydraulic actuator device (36) so as to provide the necessary actuation pressure to said only one braking device (24"), and disconnecting the other braking device (24'), by means of its regulating device (48), so as not to be affected by the change of pressure imposed by the first electro-hydraulic actuator device (36) .

3. Braking system for vehicles (4) according to any of claims from 1 to 2, wherein the first electro-hydraulic actuator device (36) comprises an electric motor (60) which actuates a pusher (64) acting on a pump (66) provided with two pistons (68, 70) arranged in parallel, each piston (68, 70) being fluidically connected with one of said first and second hydraulic circuits (40, 44).

4. Braking system for vehicles (4) according to claim 3, wherein a mechanism (72) which connects the electric motor (60) to the pusher (64) comprises rotation sensors of the electric motor (60) and translation sensors of the pusher (64), so as to supply to the processing unit (28) data on the effective operation of the first electro-hydraulic actuator device (36).

5. Braking system for vehicles (4) according to any of the preceding claims, wherein the first and second hydraulic supply circuits (40,44) contain a magnetorheological fluid and wherein the regulating devices (48,52) comprise electric actuators (80) suitable to change the rheological properties of said magnetorheological fluid so as to vary the actuation pressures of the respective braking devices (24',24") and wherein the processing unit (28) is programmed to operate the first regulating device (48) to close the fluid connection of the first braking device (24') so as to maintain a constant delivery pressure to said first braking device (24"), while the first electro-hydraulic actuator device (36) changes the delivery pressure of the second braking device (24") which is kept in fluid connection with the first actuator device (36) by the second regulating device (52).

6. Braking system for vehicles (4) according to any of the previous claims, wherein the first electro-hydraulic actuator device (36) comprises a pump (66) provided with a separate chamber (67) containing magnetorheological fluid, said chamber housing electric actuators (80) suitable to modify the rheological properties of said magnetorheological fluid in order to selectively block the actuation of the pistons (68, 70) of the first electro-hydraulic actuator device (36) and thus of the respective braking devices (24', 24") .

7. Braking system for vehicles (4) according to any of the previous claims, wherein the system comprises electromechanical actuators (84) associated with additional braking devices (88', 88") of the vehicle acting on the wheels positioned on a second axle, wherein said electromechanical actuators (84) comprise an electric motor (60) kinematically connected to a pusher of the corresponding additional braking device (88', 88"), said pusher being mechanically associated with a friction element such as a pad or shoe of the braking device (88', 88'') suitable to exert a braking action on an associable brake disc or drum respectively.

8. Braking system for vehicles (4) according to any of the previous claims, comprising a second electro-hydraulic actuator device (92) operatively connected to a third and fourth hydraulic supply circuit (96,100) of a respective third and fourth braking device (88', 88"), such as a calliper of a disc brake or a drum, the second electro-hydraulic actuator device (92) being actuated by the processing unit (28) depending on the request for a braking action.

9. Braking system for vehicles (4) according to any of the previous claims, wherein the processing unit (28) is programmed to actuate the braking devices (24', 24", 88', 88") by means of the respective first and second electro-hydraulic actuator (36, 92) and/or electromechanical (84) actuators and the regulating devices (48,52), even when the manual actuation elements (8) are not actuated by the user, so as to stabilise the dynamics of the associable vehicle according to the driving conditions.

10. Braking system for vehicles (4) according to any of the previous claims, wherein the braking system (4) is provided with speed sensors applied on the wheels connected to the braking devices (24', 24", 88', 88"), and in which the processing unit (28) is programmed to prevent the blocking in rotation of the individual wheels, reducing the braking action on the wheel in locking phase, by means of the electro-hydraulic actuator devices (36, 92) and/or electromechanical actuators (84) and the regulating devices (48, 52).

11. Braking system for vehicles (4) according to any of the previous claims, wherein the braking system is provided with speed sensors applied on the wheels influenced by the braking devices (24', 24", 88', 88"), and in which the processing unit (28) is programmed to prevent the slipping in rotation of the individual wheels, applying a braking action to the wheel in slipping phase, by means of the electro-hydraulic actuator (36, 92) and/or electromechanical actuators (84) and said regulating devices (48,52).

12. Braking system for vehicles (4) according to any of the previous claims, wherein the processing unit (28) is programmed to divide the braking action over the individual braking devices (24', 24", 88', 88") so as to stabilise the trajectory of the vehicle, for an equal braking and deceleration action of the vehicle, appropriately actuating the electro-hydraulic actuator (36, 92) and/or electromechanical actuators (84) and the regulating devices (48, 52).

13. Braking system (4) for vehicles according to any of the previous claims, wherein the at least one manual actuation element (8) is fitted with sensors such as force and/or stroke meters of said manual actuation element, so as to provide the processing unit (28) with parameters to interpret and convert into actuation signals for the electro-hydraulic actuator (36, 92) and/or electromechanical actuators (84) and the regulating devices (48, 52).

14. Method of actuation and control of a braking system (4) for vehicles, comprising the steps of:
- providing a braking system (4) for vehicles comprising:
- at least one manual actuation element (8), such as a lever, a pedal or a button, operatively connected to a processing unit (28) to transmit to said processing unit (28) a request for a braking action by a user,
- wherein the manual actuation element (8) is provided with contrast means (32) suitable to simulate a predetermined actuation trend, linear or non-linear, which relates the actuation force and/or stroke of the actuation element (8),
- at least one first electro-hydraulic actuator device (36) operatively connected to a first and to a second hydraulic supply circuit (40, 44) of a respective first and second braking device (24', 24''), such as a calliper of a disc brake or a drum, the first electro-hydraulic actuator device (36) being actuated by the processing unit (28) depending on the request for a braking action,
- wherein the first and second hydraulic supply circuits (40, 44) respectively comprise a first and second device for regulating the pressure (48, 52), each interposed between the first electro-hydraulic actuator device (36) and the corresponding braking device (24', 24"), and operatively connected to said processing unit (28),
- selectively and independently actuating the regulating devices (48, 52) by means of the control unit (28), so as to set or vary the actuation pressures of the braking devices (24', 24''), downstream of the regulating devices (48, 52), regardless of the delivery pressures of the first electro-hydraulic actuator device (36), upstream of the regulating devices (48, 52),
- maintaining the fluid connection between the first electro-hydraulic actuator device (36) and the first and second braking device (24', 24''), in order to have said actuation pressures of the braking devices (24', 24") equal to the delivery pressure of the first electro-hydraulic actuator device (36), while the processing unit (28) validates the operation of the system,
- in case of correction of the braking being required, changing the delivery pressure of the first electro-hydraulic actuator device (36), so as to maintain said actuation pressures of the braking devices (24', 24"),
- in case of changing of the actuation pressure of only one of said braking devices (24'') being required, actuating the first electro-hydraulic actuator device (36) so as to provide the necessary actuation pressure to said only one braking device (24"), and disconnecting the other braking device (24'), by means of its regulating device (48), so as not to be affected by the change of pressure imposed by the first electro-hydraulic actuator device (36).

## Patentansprüche

1. Bremssystem für Fahrzeuge (4) umfassend
- mindestens ein Handbetätigungselement (8), wie z.B. ein Hebel, ein Pedal oder eine Taste, das mit einer Verarbeitungseinheit (28) operativ verbunden ist, um an die Verarbeitungseinheit (28) eine Anforderung für eine Bremsaktion durch einen Benutzer zu übertragen,
- wobei das Handbetätigungselement (8) mit Kontrastmitteln (32) versehen ist, die geeignet sind, einen vorbestimmten, linearen oder nichtlinearen Betätigungstrend zu simulieren, der mit der Betätigungskraft und/oder dem Hub des Handbetätigungselements (8) in Beziehung steht,
- mindestens eine erste elektrohydraulische Betätigungsvorrichtung (36), die mit einem ersten und mit einem zweiten hydraulischen Versorgungskreis (40, 44) einer jeweiligen ersten und zweiten Bremsvorrichtung (24', 24"), wie beispielsweise einem Bremssattel einer Scheibenbremse oder einer Trommel, wirkverbunden ist, wobei die erste elektrohydraulische Betätigungsvorrichtung (36) durch die Verarbeitungseinheit (28) in Abhängigkeit von der Anforderung einer Bremswirkung betätigt wird,
- wobei der erste und der zweite hydraulische Versorgungskreis (40, 44) jeweils eine erste und eine zweite Vorrichtung zur Regelung des Drucks (48, 52) umfassen, die jeweils zwischen der ersten elektrohydraulischen Betätigungsvorrichtung (36) und der entsprechenden Bremsvorrichtung (24', 24") angeordnet sind und mit der Verarbeitungseinheit (28) in Wirkverbindung stehen,
- wobei die Verarbeitungseinheit (28) so programmiert ist, dass sie in der Lage ist, selektiv und unabhängig die Regelvorrichtungen (48, 52) und die erste elektrohydraulische Betätigungsvorrichtung (36) zu betätigen, um den Betätigungsdruck mindestens einer der Bremsvorrichtungen (24', 24") stromabwärts der Regelvorrichtungen (48, 52) unabhängig von den Lieferdrücken der ersten elektrohydraulischen Betätigungsvorrichtung (36) stromaufwärts der Regelvorrichtungen (48, 52) einzustellen,
wobei die Regelvorrichtungen (48, 52) Magnetsteuerventile (56) umfassen, die geeignet sind, die Fluidverbindung zwischen der ersten elektrohydraulischen Betätigungsvorrichtung (36) und jeder Bremsvorrichtung (24', 24") zu öffnen und/oder zu schließen, und wobei die Verarbeitungseinheit (28) programmiert ist, die erste Regelvorrichtung (48) zu betätigen, um die Fluidverbindung der ersten Bremsvorrichtung (24') zu schließen, um so einen konstanten Lieferdruck zu der ersten Bremsvorrichtung (24') aufrechtzuerhalten, während die erste elektromechanische Betätigungsvorrichtung (36) den Betätigungsdruck der zweiten Bremsvorrichtung (24") ändert, die durch die zweite Regelvorrichtung (52) in Fluidverbindung mit der ersten elektrohydraulischen Betätigungsvorrichtung (36) gehalten wird,
**dadurch gekennzeichnet, dass** die Verarbeitungseinheit 28 so programmiert ist:
- den Förderdruck der ersten elektro-hydraulischen Betätigungsvorrichtung (36) so einstellen, dass er gleich dem Wert des Versorgungsdrucks für die erste Bremsvorrichtung (24') stromabwärts der ersten Regelvorrichtung (48) ist, wenn die Fluidverbindung der ersten Bremsvorrichtung geschlossen ist,
- die Fluidverbindung zwischen der ersten Bremsvorrichtung (24') und der ersten elektrohydraulischen Betätigungsvorrichtung (36) durch die Betätigung der ersten Regelvorrichtung (48) wiederherzustellen.

2. Bremssystem für Fahrzeuge (4) nach Anspruch 1, wobei die Verarbeitungseinheit (28) programmiert ist, um:
- die Flüssigkeitsverbindung zwischen der ersten elektro-hydraulischen Betätigungsvorrichtung (36) und der ersten und zweiten Bremsvorrichtung (24', 24") aufrechtzuerhalten, damit die Betätigungsdrücke der Bremsvorrichtungen (24', 24") gleich dem Lieferdruck der ersten elektro-hydraulischen Betätigungsvorrichtung (36) sind, während die Verarbeitungseinheit (28) den Betrieb des Systems (4) validiert,
- falls eine Korrektur der Bremsung erforderlich ist, Änderung des Lieferdrucks der ersten elektro-hydraulischen Betätigungsvorrichtung (36), um die genannten Betätigungsdrücke der Bremsvorrichtungen (24', 24") aufrechtzuerhalten,
- falls eine Änderung des Betätigungsdrucks nur einer der genannten Bremsvorrichtungen (24") erforderlich ist, Betätigen der ersten elektrohydraulischen Betätigungsvorrichtung (36), um der genannten nur einen Bremsvorrichtung (24") den erforderlichen Betätigungsdruck bereitzustellen, und Trennen der anderen Bremsvorrichtung (24') mittels ihrer Regelvorrichtung (48), um von der durch die erste elektrohydraulische Betätigungsvorrichtung (36) auferlegten Druckänderung nicht beeinflusst zu werden.

3. Bremssystem für Fahrzeuge (4) nach einem der Ansprüche 1 bis 2, wobei die erste elektrohydraulische Betätigungsvorrichtung (36) einen Elektromotor (60) aufweist, der einen Schieber (64) betätigt, der auf eine Pumpe (66) wirkt, die mit zwei parallel angeordneten Kolben (68, 70) versehen ist, wobei jeder Kolben (68, 70) mit einem der ersten und zweiten Hydraulikkreise (40, 44) fluidisch verbunden ist.

4. Bremssystem für Fahrzeuge (4) nach Anspruch 3, wobei ein Mechanismus (72), der den Elektromotor (60) mit dem Schieber (64) verbindet, Rotationssensoren des Elektromotors (60) und Translationssensoren des Schiebers (64) umfasst, um der Verarbeitungseinheit (28) Daten über den effektiven Betrieb der ersten elektrohydraulischen Betätigungsvorrichtung (36) zu liefern.

5. Bremssystem für Fahrzeuge (4) nach einem der vorstehenden Ansprüche, wobei der erste und der zweite hydraulische Versorgungskreis (40, 44) ein magnetorheologisches Fluid enthalten und wobei die Regelvorrichtungen (48, 52) elektrische Aktuatoren (80) umfassen, die geeignet sind, die rheologischen Eigenschaften des magnetorheologischen Fluids zu ändern, um so die Betätigungsdrücke der jeweiligen Bremsvorrichtungen (24') zu variieren,24") und wobei die Verarbeitungseinheit (28) so programmiert ist, dass sie die erste Regelvorrichtung (48) betätigt, um die Fluidverbindung der ersten Bremsvorrichtung (24') zu schließen, um so einen konstanten Lieferdruck zu der ersten Bremsvorrichtung (24") aufrechtzuerhalten, während die erste elektrohydraulische Betätigungsvorrichtung (36) den Lieferdruck der zweiten Bremsvorrichtung (24") ändert, die durch die zweite Regelvorrichtung (52) in Fluidverbindung mit der ersten Betätigungsvorrichtung (36) gehalten wird.

6. Bremssystem für Fahrzeuge (4) nach einem der vorstehenden Ansprüche, wobei die erste elektrohydraulische Betätigungsvorrichtung (36) eine Pumpe (66) aufweist, die mit einer separaten Kammer (67) versehen ist, die magnetorheologisches Fluid enthält, wobei die Kammer elektrische Aktuatoren (80) aufnimmt, die geeignet sind, die rheologischen Eigenschaften des magnetorheologischen Fluids zu modifizieren, um selektiv die Betätigung der Kolben (68, 70) der ersten elektrohydraulischen Betätigungsvorrichtung (36) und somit der jeweiligen Bremsvorrichtungen (24', 24") zu blockieren.

7. Bremssystem für Fahrzeuge (4) nach einem der vorhergehenden Ansprüche, wobei das System elektromechanische Aktuatoren (84) umfasst, die mit zusätzlichen Bremsvorrichtungen (88', 88") des Fahrzeugs verbunden sind, die auf die Räder wirken, die auf einer zweiten Achse positioniert sind, wobei die elektromechanischen Aktuatoren (84) einen Elektromotor (60) umfassen, der kinematisch mit einem Schieber der entsprechenden zusätzlichen Bremsvorrichtung (88', 88") verbunden ist, wobei der Schieber mechanisch mit einem Reibungselement, wie beispielsweise einem Bremsklotz oder einer Bremsbacke der Bremsvorrichtung (88', 88") verbunden ist, das geeignet ist, eine Bremswirkung auf eine zugehörige Bremsscheibe bzw. -trommel auszuüben.

8. Bremssystem für Fahrzeuge (4) nach einem der vorstehenden Ansprüche, mit einer zweiten elektrohydraulischen Betätigungsvorrichtung (92), die betriebsmäßig mit einem dritten und vierten hydraulischen Versorgungskreis (96, 100) einer dritten bzw. vierten Bremsvorrichtung (88', 88"), wie beispielsweise einem Bremssattel einer Scheibenbremse oder einer Trommel, verbunden ist, wobei die zweite elektrohydraulische Betätigungsvorrichtung (92) durch die Verarbeitungseinheit (28) in Abhängigkeit von der Anforderung einer Bremswirkung betätigt wird.

9. Bremssystem für Fahrzeuge (4) nach einem der vorstehenden Ansprüche, wobei die Verarbeitungseinheit (28) so programmiert ist, dass sie die Bremsvorrichtungen (24', 24", 88', 88") mittels des ersten bzw. zweiten elektrohydraulischen Aktuators (36, 92) und/oder der elektromechanischen (84) Aktuatoren und der Regelvorrichtungen (48, 52) auch dann betätigt, wenn die manuellen Betätigungselemente (8) nicht vom Benutzer betätigt werden, um die Dynamik des zuzuordnenden Fahrzeuges entsprechend den Fahrbedingungen zu stabilisieren.

10. Bremssystem für Fahrzeuge (4) nach einem der vorstehenden Ansprüche, wobei das Bremssystem (4) mit Geschwindigkeitssensoren versehen ist, die auf die mit den Bremsvorrichtungen (24', 24", 88', 88") verbundenen Räder wirken, und bei dem die Verarbeitungseinheit (28) so programmiert ist, dass sie die Drehblockierung der einzelnen Räder verhindert, indem sie die Bremswirkung auf das Rad in der Blockierphase mittels der elektrohydraulischen Betätigungsvorrichtungen (36, 92) und/oder elektromechanischen Aktuatoren (84) und der Regelvorrichtungen (48, 52) verringert.

11. Bremssystem für Fahrzeuge (4) nach einem der vorstehenden Ansprüche, wobei das Bremssystem mit Geschwindigkeitssensoren versehen ist, die auf die von den Bremsvorrichtungen (24', 24", 88', 88") beeinflußten Räder aufgebracht werden, und bei dem die Verarbeitungseinheit (28) so programmiert ist, dass sie den Drehschlupf der einzelnen Räder verhindert, indem sie eine Bremswirkung auf das Rad in der Schlupfphase mittels des elektrohydraulischen Aktuators (36, 92) und/oder der elektromechanischen Aktuatoren (84) und der Regelvorrichtungen (48, 52) ausübt.

12. Bremssystem für Fahrzeuge (4) nach einem der vorhergehenden Ansprüche, wobei die Verarbeitungseinheit (28) so programmiert ist, dass sie die Bremswirkung auf die einzelnen Bremsvorrichtungen (24', 24", 88', 88") aufteilt, um die Trajektorie des Fahrzeugs zu stabilisieren, für eine gleichmäßige Brems- und Verzögerungswirkung des Fahrzeugs, wobei der elektrohydraulische Aktuator (36, 92) und/oder die elektromechanischen Aktuatoren (84) und die Regelvorrichtungen (48, 52) in geeigneter Weise betätigt werden.

13. Bremssystem (4) für Fahrzeuge nach einem der vorstehenden Ansprüche wobei das mindestens eine manuelle Betätigungselement (8) mit Sensoren wie Kraft- und/oder Wegmessgeräten des manuellen Betätigungselements ausgestattet ist, um der Verarbeitungseinheit (28) Parameter zu liefern, die interpretiert und in Betätigungssignale für den elektrohydraulischen Aktuator (36, 92) und/oder die elektromechanischen Aktuatoren (84) und die Regelvorrichtungen (48, 52) umgewandelt werden sollen.

14. Verfahren zur Betätigung und Steuerung eines Bremssystems (4) für Fahrzeuge, das die folgenden Schritte umfasst:
- Bereitstellen eines Bremssystems (4) für Fahrzeuge umfassend:
- mindestens ein Handbetätigungselement (8), wie z.B. ein Hebel, ein Pedal oder eine Taste, das mit einer Verarbeitungseinheit (28) operativ verbunden ist, um an die Verarbeitungseinheit (28) eine Anforderung für eine Bremsaktion durch einen Benutzer zu übertragen,
- wobei das Handbetätigungselement (8) mit Kontrastmitteln (32) versehen ist, die geeignet sind, einen vorbestimmten, linearen oder nichtlinearen Betätigungstrend zu simulieren, der mit der Betätigungskraft und/oder dem Hub des Betätigungselements (8) in Beziehung steht,
- mindestens eine erste elektrohydraulische Betätigungsvorrichtung (36), die mit einem ersten und mit einem zweiten hydraulischen Versorgungskreis (40, 44) einer jeweiligen ersten und zweiten Bremsvorrichtung (24', 24"), wie beispielsweise einem Bremssattel einer Scheibenbremse oder einer Trommel, wirkverbunden ist, wobei die erste elektrohydraulische Betätigungsvorrichtung (36) durch die Verarbeitungseinheit (28) in Abhängigkeit von der Anforderung einer Bremswirkung betätigt wird,
- wobei der erste und der zweite hydraulische Versorgungskreis (40, 44) jeweils eine erste und eine zweite Vorrichtung zur Regelung des Drucks (48, 52) umfassen, die jeweils zwischen der ersten elektrohydraulischen Betätigungsvorrichtung (36) und der entsprechenden Bremsvorrichtung (24', 24") angeordnet sind und mit der Verarbeitungseinheit (28) in Wirkverbindung stehen,
- Betätigen der Regeleinrichtungen (48, 52) mittels der Steuereinheit (28) selektiv und unabhängig, um die Betätigungsdrücke der Bremseinrichtungen (24', 24") stromabwärts der Regeleinrichtungen (48, 52) unabhängig von den Lieferdrücken der ersten elektrohydraulischen Betätigungseinrichtung (36) stromaufwärts der Regeleinrichtungen (48, 52) einzustellen oder zu variieren,
- Aufrechterhalten der Flüssigkeitsverbindung zwischen der ersten elektro-hydraulischen Betätigungsvorrichtung (36) und der ersten und zweiten Bremsvorrichtung (24', 24"), damit die Betätigungsdrücke der Bremsvorrichtungen (24', 24") gleich dem Lieferdruck der ersten elektro-hydraulischen Betätigungsvorrichtung (36) sind, während die Verarbeitungseinheit (28) den Betrieb des Systems validiert,
- falls eine Korrektur der Bremsung erforderlich ist, Ändern des Lieferdrucks der ersten elektro-hydraulischen Betätigungsvorrichtung (36), um die genannten Betätigungsdrücke der Bremsvorrichtungen (24', 24") aufrechtzuerhalten,
- falls eine Änderung des Betätigungsdrucks nur einer der genannten Bremsvorrichtungen (24") erforderlich ist, Betätigen der ersten elektrohydraulischen Betätigungsvorrichtung (36), um der genannten nur einen Bremsvorrichtung (24") den erforderlichen Betätigungsdruck bereitzustellen, und Trennen der anderen Bremsvorrichtung (24') mittels ihrer Regelvorrichtung (48), um von der durch die erste elektrohydraulische Betätigungsvorrichtung (36) auferlegten Druckänderung nicht beeinflusst zu werden.

## Revendications

1. Système de freinage pour véhicules (4) comprenant
- au moins un élément d'actionnement manuel (8), tel qu'un levier, une pédale ou un bouton, connecté fonctionnellement à une unité de traitement (28), pour transmettre à ladite unité de traitement (28) une demande d'une action de freinage par un utilisateur,
- dans lequel l'élément d'actionnement manuel (8) est muni de moyens de contraste (32) appropriés pour simuler une tendance d'actionnement prédéterminée, linéaire ou non linéaire, qui concerne la force d'actionnement et/ou la course de l'élément d'actionnement manuel (8),
- au moins un premier dispositif d'actionneur électrohydraulique (36) raccordé fonctionnellement à un premier et un deuxième circuit d'alimentation hydraulique (40, 44) d'un premier et d'un deuxième dispositif de freinage (24', 24") respectifs, tel qu'un étrier d'un frein à disque ou un tambour, le premier dispositif d'actionneur électrohydraulique (36) étant actionné par l'unité de traitement (28) en fonction de la demande d'une action de freinage,
- dans lequel les premier et deuxième circuits d'alimentation hydrauliques (40, 44) comprennent respectivement des premier et second dispositifs destinés à réguler la pression (48, 52), chacun étant interposé entre le premier dispositif d'actionneur électrohydraulique (36) et le dispositif de freinage (24', 24") correspondant, et connecté fonctionnellement à ladite unité de traitement (28),
- dans lequel l'unité de traitement (28) est programmée pour être capable d'actionner sélectivement et indépendamment les dispositifs de régulation (48, 52) et le premier dispositif d'actionneur électrohydraulique (36), de façon à définir la pression d'actionnement d'au moins l'un des dispositifs de freinage (24', 24"), en aval des dispositifs de régulation (48, 52), sans tenir compte des pressions de distribution du premier dispositif d'actionneur électrohydraulique (36), en amont des dispositifs de régulation (48, 52),
dans lequel les dispositifs de régulation (48, 52) comprennent des électrovannes de commande (56) appropriées pour ouvrir et/ou fermer le raccordement fluidique entre le premier dispositif d'actionneur électrohydraulique (36) et chaque dispositif de freinage (24', 24"), et dans lequel l'unité de traitement (28) est programmée pour faire fonctionner le premier dispositif de régulation (48) pour fermer le raccordement fluidique du premier dispositif de freinage (24') de façon à maintenir une pression de distribution constante audit premier dispositif de freinage (24'), tandis que le premier dispositif d'actionneur électromécanique (36) change la pression d'actionnement du deuxième dispositif de freinage (24") qui est maintenu en raccordement fluidique avec le premier dispositif d'actionneur électrohydraulique (36) par le second dispositif de régulation (52),
**caractérisé en ce que** l'unité de traitement (28) est programmée pour :
- ajuster la pression de distribution du premier dispositif d'actionneur électrohydraulique (36) de façon à égaler la valeur de la pression d'alimentation au premier dispositif de freinage (24'), en aval du premier dispositif de régulation (48), lorsque le raccordement fluidique du premier dispositif de freinage est fermé
- rétablir le raccordement fluidique entre le premier dispositif de freinage (24') et le premier dispositif d'actionneur électrohydraulique (36), par le biais du fonctionnement du premier dispositif de régulation (48).

2. Système de freinage pour véhicules (4) selon la revendication 1, dans lequel l'unité de traitement (28) est programmée pour :
- maintenir le raccordement fluidique entre le premier dispositif d'actionneur électrohydraulique (36) et les premier et deuxième dispositifs de freinage (24', 24"), afin d'avoir lesdites pressions d'actionnement des dispositifs de freinage (24', 24") égales à la pression de distribution du premier dispositif d'actionneur électrohydraulique (36), tandis que l'unité de traitement (28) valide le fonctionnement du système (4),
- en cas de nécessité de correction du freinage, changer la pression de distribution du premier dispositif d'actionneur électrohydraulique (36), de façon à maintenir lesdites pressions d'actionnement des dispositifs de freinage (24', 24"),
- en cas de nécessité de changement de la pression d'actionnement d'uniquement l'un desdits dispositifs de freinage (24"), actionner le premier dispositif d'actionneur électrohydraulique (36) de façon à fournir la pression d'actionnement nécessaire audit uniquement un dispositif de freinage (24"), et déconnecter l'autre dispositif de freinage (24'), au moyen de son dispositif de régulation (48), de façon à ce qu'il ne soit pas affecté par le changement de pression imposé par le premier dispositif d'actionneur électrohydraulique (36).

3. Système de freinage pour véhicules (4) selon l'une quelconque des revendications 1 et 2, dans lequel le premier dispositif d'actionneur électrohydraulique (36) comprend un moteur électrique (60) qui actionne un élément de poussée (64) agissant sur une pompe (66) munie de deux pistons (68, 70) agencés en parallèle, chaque piston (68, 70) étant raccordé fluidiquement à l'un desdits premier et deuxième circuits hydrauliques (40, 44).

4. Système de freinage pour véhicules (4) selon la revendication 3, dans lequel un mécanisme (72) qui raccorde le moteur électrique (60) à l'élément de poussée (64) comprend des capteurs de rotation du moteur électrique (60) et des capteurs de translation de l'élément de poussée (64), de façon à alimenter l'unité de traitement (28) en données sur le fonctionnement efficace du premier dispositif d'actionneur électrohydraulique (36).

5. Système de freinage pour véhicules (4) selon l'une quelconque des revendications précédentes, dans lequel les premier et deuxième circuits d'alimentation hydrauliques (40, 44) contiennent un fluide magnétorhéologique et dans lequel les dispositifs de régulation (48, 52) comprennent des actionneurs électriques (80) appropriés pour changer les propriétés rhéologiques dudit fluide magnétorhéologique de façon à faire varier les pressions d'actionnement des dispositifs de freinage (24', 24") respectifs et dans lequel l'unité de traitement (28) est programmée pour faire fonctionner le premier dispositif de régulation (48) pour fermer le raccordement fluidique du premier dispositif de freinage (24') de façon à maintenir une pression de distribution constante audit premier dispositif de freinage (24"), tandis que le premier dispositif d'actionneur électrohydraulique (36) change la pression de distribution du deuxième dispositif de freinage (24") qui est maintenu en raccordement fluidique avec le premier dispositif d'actionneur (36) par le second dispositif de régulation (52).

6. Système de freinage pour véhicules (4) selon l'une quelconque des revendications précédentes, dans lequel le premier dispositif d'actionneur électrohydraulique (36) comprend une pompe (66) munie d'une chambre séparée (67) contenant un fluide magnétorhéologique, ladite chambre logeant des actionneurs électriques (80) appropriés pour modifier les propriétés rhéologiques dudit fluide magnétorhéologique afin de bloquer sélectivement l'actionnement des pistons (68, 70) du premier dispositif d'actionneur électrohydraulique (36) et ainsi des dispositifs de freinage (24', 24") respectifs.

7. Système de freinage pour véhicules (4) selon l'une quelconque des revendications précédentes, dans lequel le système comprend des actionneurs électromécaniques (84) associés à des dispositifs de freinage supplémentaires (88', 88") du véhicule agissant sur les roues positionnées sur un second essieu, dans lequel lesdits actionneurs électromécaniques (84) comprennent un moteur électrique (60) raccordé cinématiquement à un élément de poussée du dispositif de freinage supplémentaire (88', 88") correspondant, ledit élément de poussée étant associé mécaniquement à un élément de frottement tel qu'un patin ou un sabot du dispositif de freinage (88', 88") approprié pour exercer une action de freinage sur un disque ou un tambour de frein associable respectivement.

8. Système de freinage pour véhicules (4) selon l'une quelconque des revendications précédentes, comprenant un second dispositif d'actionneur électrohydraulique (92) raccordé fonctionnellement à un troisième et un quatrième circuit d'alimentation hydraulique (96, 100) de troisième et quatrième dispositifs de freinage (88', 88") respectifs, tels qu'un étrier d'un disque de frein ou un tambour, le second dispositif d'actionneur électrohydraulique (92) étant actionné par l'unité de traitement (28) en fonction de la demande d'une action de freinage.

9. Système de freinage pour véhicules (4) selon l'une quelconque des revendications précédentes, dans lequel l'unité de traitement (28) est programmée pour actionner les dispositifs de freinage (24', 24", 88', 88") au moyen des premier et second actionneurs électrohydrauliques (36, 92) respectifs et/ou d'actionneurs électromécaniques (84) et des dispositifs de régulation (48, 52), même lorsque les éléments d'actionnement manuels (8) ne sont pas actionnés par l'utilisateur, de façon à stabiliser la dynamique du véhicule associable selon les conditions de conduite.

10. Système de freinage pour véhicules (4) selon l'une quelconque des revendications précédentes, dans lequel le système de freinage (4) est muni de capteurs de vitesse appliqués sur les roues raccordées aux dispositifs de freinage (24', 24", 88', 88"), et dans lequel l'unité de traitement (28) est programmée pour empêcher le blocage en rotation des roues individuelles, en réduisant l'action de freinage sur la roue en phase de verrouillage, au moyen des dispositifs d'actionneurs électrohydrauliques (36, 92) et/ou d'actionneurs électromécaniques (84) et des dispositifs de régulation (48, 52).

11. Système de freinage pour véhicules (4) selon l'une quelconque des revendications précédentes, dans lequel le système de freinage est muni de capteurs de vitesse appliqués sur les roues influencées par les dispositifs de freinage (24', 24", 88', 88"), et dans lequel l'unité de traitement (28) est programmée pour empêcher le dérapage en rotation des roues individuelles, en appliquant une action de freinage à la roue en phase de dérapage, au moyen de l'actionneur électrohydraulique (36, 92) et/ou d'actionneurs électromécaniques (84) et desdits dispositifs de régulation (48, 52).

12. Système de freinage pour véhicules (4) selon l'une quelconque des revendications précédentes, dans lequel l'unité de traitement (28) est programmée pour diviser l'action de freinage entre les dispositifs de freinage (24', 24", 88', 88") individuels de façon à stabiliser la trajectoire du véhicule, pour une action de freinage et de décélération égale du véhicule, en actionnant de manière appropriée l'actionneur électrohydraulique (36, 92) et/ou des actionneurs électromécaniques (84) et les dispositifs de régulation (48, 52).

13. Système de freinage (4) pour véhicules selon l'une quelconque des revendications précédentes, dans lequel l'au moins un élément d'actionnement manuel (8) est équipé de capteurs tels que des compteurs de force et/ou de course dudit élément d'actionnement manuel, de façon à fournir à l'unité de traitement (28) des paramètres à interpréter et convertir en signaux d'actionnement pour l'actionneur électrohydraulique (36, 92) et/ou des actionneurs électromécaniques (84) et les dispositifs de régulation (48, 52).

14. Procédé d'actionnement et de commande d'un système de freinage (4) pour véhicules, comprenant les étapes consistant à :
- fournir un système de freinage (4) pour véhicules comprenant :
- au moins un élément d'actionnement manuel (8), tel qu'un levier, une pédale ou un bouton, connecté fonctionnellement à une unité de traitement (28), pour transmettre à ladite unité de traitement (28) une demande d'une action de freinage par un utilisateur,
- dans lequel l'élément d'actionnement manuel (8) est muni de moyens de contraste (32) appropriés pour simuler une tendance d'actionnement prédéterminée, linéaire ou non linéaire, qui concerne la force d'actionnement et/ou la course de l'élément d'actionnement manuel (8),
- au moins un premier dispositif d'actionneur électrohydraulique (36) raccordé fonctionnellement à un premier et un deuxième circuit d'alimentation hydraulique (40, 44) d'un premier et d'un deuxième dispositif de freinage (24', 24") respectifs, tel qu'un étrier d'un frein à disque ou un tambour, le premier dispositif d'actionneur électrohydraulique (36) étant actionné par l'unité de traitement (28) en fonction de la demande d'une action de freinage,
- dans lequel les premier et deuxième circuits d'alimentation hydrauliques (40, 44) comprennent respectivement des premier et second dispositifs destinés à réguler la pression (48, 52), chacun étant interposé entre le premier dispositif d'actionneur électrohydraulique (36) et le dispositif de freinage (24', 24") correspondant, et connecté fonctionnellement à ladite unité de traitement (28),
- actionner sélectivement et indépendamment les dispositifs de régulation (48, 52) au moyen de l'unité de traitement (28), de façon à définir ou faire varier les pressions d'actionnement des dispositifs de freinage (24', 24"), en aval des dispositifs de régulation (48, 52), sans tenir compte des pressions de distribution du premier dispositif d'actionneur électrohydraulique (36), en amont des dispositifs de régulation (48, 52),
- maintenir le raccordement fluidique entre le premier dispositif d'actionneur électrohydraulique (36) et les premier et deuxième dispositifs de freinage (24', 24"), afin d'avoir lesdites pressions d'actionnement des dispositifs de freinage (24', 24") égales à la pression de distribution du premier dispositif d'actionneur électrohydraulique (36), tandis que l'unité de traitement (28) valide le fonctionnement du système,
- en cas de nécessité de correction du freinage, changer la pression de distribution du premier dispositif d'actionneur électrohydraulique (36), de façon à maintenir lesdites pressions d'actionnement des dispositifs de freinage (24', 24"),
- en cas de nécessité de changement de la pression d'actionnement d'uniquement l'un desdits dispositifs de freinage (24"), actionner le premier dispositif d'actionneur électrohydraulique (36) de façon à fournir la pression d'actionnement nécessaire audit uniquement un dispositif de freinage (24"), et déconnecter l'autre dispositif de freinage (24'), au moyen de son dispositif de régulation (48), de façon à ce qu'il ne soit pas affecté par le changement de pression imposé par le premier dispositif d'actionneur électrohydraulique (36).
